Europäisches Patentamt

European Patent Office

Office européen des brevets

(19)

(11) **EP 0 387 025 B1**

(12)    # EUROPEAN PATENT SPECIFICATION

(45) Date of publication and mention
of the grant of the patent:
**24.07.1996   Bulletin 1996/30**

(51) Int Cl.6: **G01F 1/68**, G01P 5/12

(21) Application number: **90302416.4**

(22) Date of filing: **07.03.1990**

(54) **Temperature compensating circuit**

Temperaturkompensationsschaltung

Circuit de compensation de température

(84) Designated Contracting States:
**AT BE CH ES FR GB IT LI NL**

(30) Priority:   **10.03.1989   JP 59266/89**

(43) Date of publication of application:
**12.09.1990   Bulletin 1990/37**

(73) Proprietor: **YAMATAKE-HONEYWELL CO. LTD.**
**Tokyo 150 (JP)**

(72) Inventor: **Hisanaga, Tetsuo**
**Yokohama City, Kanagawa ZIP 233 (JP)**

(74) Representative: **Vaufrouard, John Charles et al**
**Elkington and Fife**
**Prospect House**
**8 Pembroke Road**
**Sevenoaks, Kent TN13 1XR (GB)**

(56) References cited:
**DD-A- 209 907**         **DE-A- 3 212 033**
**US-A- 4 343 183**        **US-A- 4 566 320**

**Description**

BACKGROUND OF THE INVENTION

Field of the Invention

This invention relates to a temperature compensating circuit, and more particularly to a circuit of this kind suitable in use for a flow sensor which is adapted to e.g. measure a temperature difference between two points on a chip and detect a flow quantity from the result of such measurement.

Description of the Prior Art

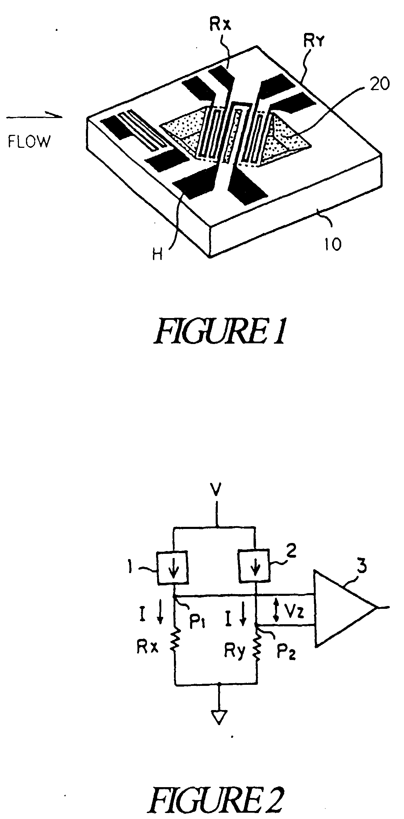

Figure 1 is a perspective view of a flow sensor of a type known as a microbridge flow sensor. The flow sensor as illustrated comprises a pair of temperature sensing elements or resistive elements $R_x$, $R_y$, a heater element H arranged between the resistive elements $R_x$ and $R_y$ and a base 10 supporting sensor elements $R_x$, $R_y$ and heater element H. Base 10 is provided with a depression 20 formed on the upper surface thereof, as shown in Figure 1, such that the elements $R_x$, $R_y$, H are bridge thereacross. An arrow in the drawing indicates the direction of a flow.

The heater element is heated to a relatively low temperature, e.g., at 60 °C. Also, sensor elements are thermally isolated from heater element so that a temperature at element RX on the upstream side of heater element is substantially equal to an ambient temperature $T_A$ °C.

Figures 2 - 4 respectively show a conventional temperature compensating circuit including temperature sensor elements such as resistive elements $R_x$, $R_y$ shown in Figure 1. In Figure 2, resistive elements $R_x$, $R_y$ are serially coupled to constant current sources 1, 2, respectively, at points P1, P2, to form a bridge circuit. Differential amplifier 3 has its input terminals coupled to connecting points P1, P2 to receive a voltage signal Vz (=I(RX-RY)), where I represents a current flowing through the bridge circuit.

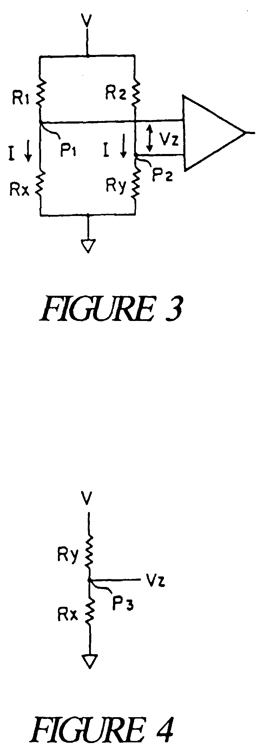

Figure 3 shows a more simplified equivalent circuit which employs resistive elements R1, R2 in place of constant current sources 1,2. If $R_1$, $R_2 >> R_x$, $R_y$ is satisfied, current I shows a substantially constant value, so that the circuit of Figure 3 operates similarly to that of Figure 2.

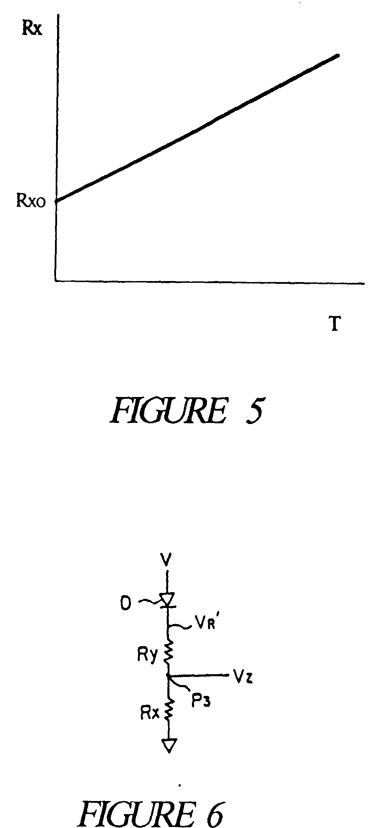

Figure 4 is another simplified circuit in which resistive elements $R_x$, $R_y$ are connected in series and output Vz is extracted from connecting points P3 between them. Thus, output Vz is expressed by $Vz = V(R_x/(R_x+R_y))$. Resistive elements $R_x$ $R_y$ are assumed to have a resistance temperature characteristic as shown in Figure 5. If a resistance value at 0 °C is $R_{xo}$, a resistance value $R_x$ at a temperature T is expressed by $R_x = R_{xo}(1+\alpha T)$. Also, a resistance value $R_y$ at a temperature T is expressed, in the same manner, by $R_y = R_{yo}(1\alpha T)$.

As described above, a temperature at resistive element $R_x$ at the upstream side is substantially equal to an ambient temperature $T_A$ °C because of a highly insulating material employed to insulate resistive element $R_x$ from the heater element. Therefore, when a fluid flow causes heat of the heater element to transfer such that the temperature of the downstream element $R_x$ is raised by $\Delta T_D$ °C a temperature of resistive element RY at the downstream side of heater element H is expressed by $T_A+\Delta T_D$ °C.

Under the condition as described above, output Vz supplied from the bridge circuit of Figure 1 to differential amplifier 3 is expressed as follows:

$$Vz = I(R_X - R_Y)$$

$$= I[R_{XO}\{1 + \alpha(T_A + \Delta T_D)\} - R_{YO}(1 + \alpha TA)]$$

$$= I\{R_{XO} - R_{YO} + \alpha(R_{XO} - R_{YO})T_A + \alpha R_{XO}\Delta T_D\} \tag{1}$$

If $\Delta T_D$ is assumed to be zero, in order to see a zero point fluctuation characteristic of output Vz, expression (1) is transformed to the following expression (2):

$$Vz = I\{R_{XO} - R_{YO} + \alpha(R_{XO} - R_{YO})T_A\} \tag{2}$$

Further assuming that $R_{XO}$ is equal to $R_{YO}$, Vz is zero. However, when $R_{XO}$ is not equal to $R_{YO}$, e.g., due to variations in a manufacturing process, output Vz is determined by expression (2) and accordingly dependent on an ambient temperature $T_A$.

In Figure 3, if $R_1$, $R_2 >> R_X$, $R_Y$ stands, the same relationship as the circuit as shown in Figure 2 is established.

In the circuit shown in Figure 4, output Vz is expressed by the following expression:

$$Vz = V \frac{R_{XO}\{1 + (\alpha(T_A + T_D))\}}{R_{XO}\{1 + \alpha(T_A + \Delta T_D)\} + R_{YO}(1 + \alpha T_A)} \tag{3}$$

If $\Delta T_D$ is zero, that is, if there is no flow, expression (3) is transformed to the following expression (4):

$$Vz = V \frac{R_{XO}}{R_{XO} + R_{YO}} \tag{4}$$

It can be seen from expression (4) that even if $R_{XO}$ is not equal to $R_{YO}$, due to variations in production, voltage signal Vz is not influenced by ambient temperature $T_A$ since voltage Vz is calculated only by a ratio of resistance values $R_{XO}$, $R_{YO}$. However, it is generally difficult to make $R_{XO}$, $R_{YO}$ equal to each other, the circuit arrangement of Figure 4 is more practical than that of Figure 2.

Thus, in Figure 4, voltage signal Vz' at a reference point where temperature difference $\Delta T_D$ between sensor elements $R_X$, $R_Y$ is zero is expressed as (3) minus (4):

$$Vz' = V \frac{R_{XO}\{1 + (\alpha(T_A + T_D))\}}{R_{XO}\{1 + \alpha(T_A + \Delta T_D)\} + R_{YO}(1 + \alpha T_A)} \cdot V\frac{R_{XO}}{R_{XO} + R_{YO}}$$

$$= \frac{R_{XO}R_{YO}\alpha\Delta T_D}{\{(R_{XO} + R_{YO})(1 + \alpha T_A) + R_{XO}\alpha\Delta T_D\}(R_{XO} + R_{YO})} \tag{5}$$

If change in $\Delta T_D$ is small and if $1 + \alpha T_A \gg \alpha\Delta T_D$ stands, Vz' is expressed by the following approximation (6):

$$Vz' \approx V\frac{R_{XO}R_{YO}\alpha\Delta T_D}{(R_{XO} + R_{YO})^2(1 + \alpha T_A)} \tag{6}$$

As is apparent from approximation (6), voltage signal Vz' is influenced by ambient temperature $T_A$ such that, when $\alpha$ is a positive value, voltage signal Vz' becomes smaller as ambient temperature $T_A$ is higher.

To reduce such influence of ambient temperature, diode D is inserted whose forward voltage represents a negative temperature sensor element $R_y$, as shown in Figure 6.

However, it is quite difficult to match the temperature coefficient of diode D with those of temperature sensor elements $R_x$, $R_y$. Also, temperature compensation is not precisely achieved e.g. by variations in forward voltage of diode D and difference in temperature between diode D and temperature sensor elements $R_x$, $R_y$ which may occur if they are located separately.

A microbridge fluid flow sensor is disclosed in former German Democratic Republic Patent Application NO. 209907 in which temperature sensitive elements mounted on a substrate form the arms of a bridge circuit with a heater being provided to heat fluid as it flows across the substrate between sensitive elements. The sensor includes an ambient temperature compensating circuit including a further temperature sensitive element but the compensating circuit lacks stability due inter alia to the remoteness of the compensating element from the bridge elements.

United States Patent Number 4343 183 discloses an apparatus for measuring the flow of air through the air intake manifold of an internal combustion engine. A controller regulates current to a bridge circuit having a first temperature-dependent resistor which is disposed in the air flow within the manifold and whose resistance is a function of the current flow therethrough and the flow rate and temperature of the air. A second fast responding temperature-dependent resistor, which is disposed in the manifold and supplied with a very small current so that its resistance is essentially a function of the air temperature, provides an air temperature signal which is amplified and/or differentiated and supplied to the controller as a precise correction signal for the bridge diagonal voltage signal which is also an input signal to the controller, so that the current output of the controller is a measure of the air flow.

This arrangement employs only two sensors and attempts to provide correction of the measurement relating to temperature of an air flow made by a single sensor to determine flow rate; it does not employ a heater. The present invention employs two sensors and a heater and a compensation circuit which includes a third temperature sensor for providing compensation for ambient temperature to the first two sensors to permit very accurate flow measurement.

US-A-4566 320 discloses another flow sensing or differential pressure sensing device utilizing a pair of bridges. A first bridge operates a heating element and a temperature dependent resistor to in turn control an error integrator. The error feedback provides the voltage for both of the bridges thereby keeping the operation of the bridges compensated for ambient temperature variations.

This controls the supply of current to a heating element dependant upon ambient temperature it does not maintain constant the current to the first and second sensors.

## OBJECTS AND SUMMARY OF THE INVENTION

In view of the problem as mentioned above, it is an object of the present invention to provide a temperature compensating circuit which is capable of accurately eliminating influences of ambient temperature and producing a precise voltage signal indicative of a difference in temperature between two temperature sensor elements provided on a semiconductor substrate.

According to the invention there is provided a fluid flow sensor comprising first and second temperature sensitive elements (Rx,Ry) formed on a semiconductor substrate (10) on opposite sides of a heating element in the direction of fluid flow so that fluid flow causes a differential heating of one of the temperature sensitive elements relative to the other, a circuit for measuring the fluid flow provided by the first and second temperature sensitive elements connected in series with a junction point between the first and second elements being connectible to a circuit for indicating fluid flow as a function of the voltage at the junction, characterised in an ambient temperature compensation circuit comprising means (4,R1) for providing a constant current and a third temperature sensitive element ($R_R$) formed on the semiconductor substrate and coupled with the constant current means such that a voltage developed across the third temperature sensitive element provides a voltage that is a function of the ambient temperature of the fluid which voltage controls, and maintains constant, a current supplied to the first and second temperature sensitive elements.

The above and other objects and features of the present invention will become apparent from the following detailed description of the preferred embodiments with reference to the accompanying drawings.

## BRIEF DESCRIPTION OF THE DRAWINGS

Figure 1 is a perspective view showing an appearance of a flow sensor;
Figures 2, 3 and 4 are schematic circuit diagrams respectively showing a prior art circuits;
Figure 5 is a graph showing a resistance - temperature characteristic of a temperature sensor element;
Figure 6 is a schematic circuit diagram showing a prior art temperature compensating circuit employing a diode; and
Figures 7, 8 and 9 are schematic circuit diagrams respectively showing first, second and third embodiments of the present invention.

## DETAILED DESCRIPTION OF THE PREFERRED EMBODIMENTS

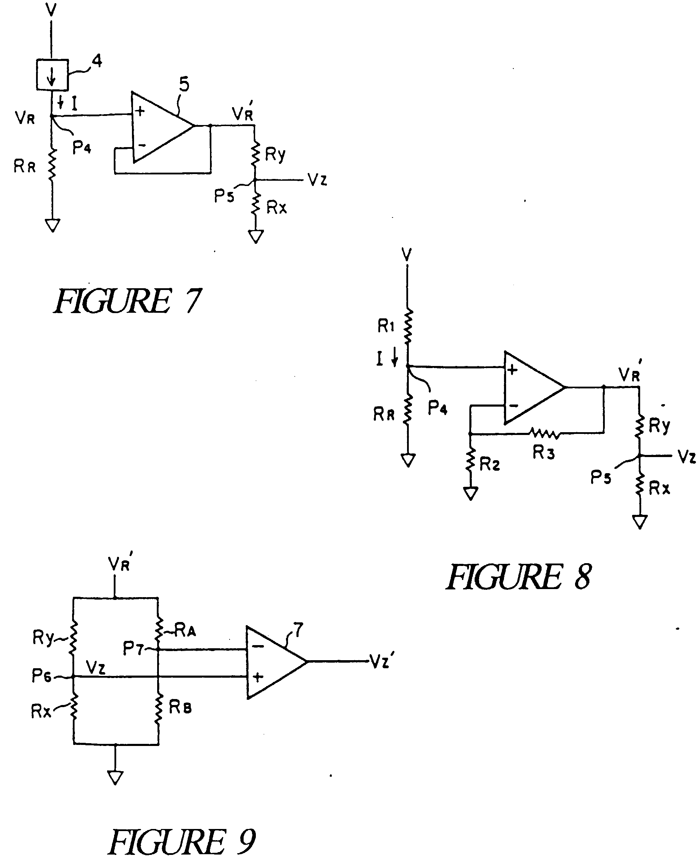

A first embodiment of the present invention will now be described with reference to Figure 7. In Figure 7, like parts corresponding to those in Figures 2 - 4 are designated the same reference numerals and detailed explanation thereof will be omitted.

In a temperature compensating circuit of Figure 7, third temperature sensor element $R_R$ is disposed on the same substrate as sensor elements $R_X$, $R_Y$. Constant current source 4 is coupled in series to third temperature sensor element $R_R$ to supply the circuit with constant current I. Amplifier 5 has its non-inverting input terminal coupled to a connecting point $P_4$ between source I and sensor element $R_R$ to be supplied with voltage $V_R$ and its output terminal coupled to an end of serially connected sensor elements $R_X$, $R_Y$ to thereby form a voltage follower circuit.

A voltage $V_R$ across sensor element $R_R$ is amplified by voltage follower circuit 5 to produce a voltage $V_R'$ which in turn is applied to temperature sensor elements $R_X$, $R_Y$, and consequently a voltage Vz is extracted from connecting point $P_5$ between resistive elements $R_X$, $R_Y$.

Voltage $V_R'$ derived from amplifier 5 is expressed by the following expression (7):

$$V_R' = V_R = IR_R = IR_{RO}(1 + \alpha T_A) \qquad (7)$$

From this expression (7) and the foregoing expression (6), Vz' is expressed as follows:

$$Vz' = \frac{V_R' R_{XO} R_{YO} \alpha \Delta T}{(R_{XO} + R_{YO})^2 (1 + \alpha T_A)}$$

$$= \frac{IR_{RO}(1 + \alpha T_A) R_{XO} R_{YO} \alpha \Delta T}{(R_{XO} + R_{YO})^2 (1 + \alpha T_A)}$$

$$= \frac{IR_{RO} R_{XO} R_{YO} \alpha \Delta T}{(R_{XO} + R_{YO})^2} \qquad (8)$$

It will be understood from expression (8) that voltage Vz' will not be influenced by ambient temperature $T_A$. Further, a current $I_{XY}$ flowing sensor elements $R_X$, $R_Y$ is expressed by the following expression (9):

$$I_{XY} = \frac{V_R{}'}{R_X + R_Y} = \frac{IR_R}{R_X + R_Y} \qquad (9)$$

If the thickness of these elements varies by a ratio d with respect to a reference thickness, current $I_{XY}{}'$ through the sensor elements $R_X$, $R_Y$ is:

$$I_{XY}{}' = \frac{IR_R(1+d)}{R_X(1+d) + R_Y(1+d)} = \frac{IR_R}{R_X + R_Y} \qquad (9)'$$

As is apparent from the expression (9)′, current $I_{XY}{}'$ is equal to current $I_{XY}$, that is, the circuit is free from the influence of variation d in thickness which may occur in a manufacturing process.

As described above, since third temperature sensor element $R_R$ is disposed on the same substrate surface as first and second sensor elements $R_X$, $R_Y$, a difference in temperature at the locations of sensor elements RR, RX is not present so that an error in temperature compensation can be largely reduced. Also, current through the sensor elements $R_X$, $R_Y$ can be always maintained substantially constant even if these elements respectively have a different resistance value from each other.

Figure 8 shows a second embodiment of the present invention where constant current source 4 in Figure 7 is replaced by resistor $R_1$ and feedback resistor $R_2$, $R_3$ are connected to voltage follower circuit 5.

Thus, output voltage $V_R{}'$ from voltage follower circuit is expressed by:

$$V_R{}' = V \frac{R_R \cdot R_3}{R_1 \cdot R_2} \qquad (10)$$

In this expression, if it is assumed that $R_1 \gg R_R$ stands, current I through third sensor element $R_R$ is substantially constant, thereby making it possible to readily perform the same function as the embodiment shown in Figure 7.

Figure 9 shows an arrangement for producing output Vz′ based on output voltage $V_R{}'$ of voltage follower circuit 5. Serially connected resistors $R_A$, $R_B$ are connected to serially connected first and second temperature sensor elements $R_X$, $R_Y$ to form a bridge circuit. Then, the inverting terminal of differential amplifier 7 is connected to a connecting point $P_6$ between resistors $R_A$, $R_B$ while the non-inverting terminal of the same is connected to a connecting point $P_7$ between sensor resistive elements $R_X$, $R_Y$. In this arrangement, resistors RA, RB are selected so as to establish $R_Y \cdot R_B = R_X \cdot R_A$ when temperature difference $\Delta T_D$ between sensor elements $R_X$, $R_Y$ is zero.

As described above, the temperature compensating circuit according to the present invention has a third temperature sensor element for detecting an ambient temperature disposed on the same substrate on which first and second temperature sensor elements are located, and a voltage across the third sensor element, generated by supplying a current thereto, is applied to the first and second sensor elements. Therefore, a voltage applied to first and second sensor elements is automatically changed corresponding to change in ambient temperature, and accordingly a difference in temperature between first and second sensor elements can be precisely detected in a form of voltage signal.

## Claims

1. A fluid flow sensor comprising first and second temperature sensitive elements (Rx,Ry) formed on a semiconductor substrate (10) on opposite sides of a heating element in the direction of fluid flow so that fluid flow causes a differential heating of one of the temperature sensitive elements relative to the other, a circuit for measuring the fluid flow provided by the first and second temperature sensitive elements connected in series with a junction point between the first and second elements being connectible to a circuit for indicating fluid flow as a function of the voltage at the junction, characterised in an ambient temperature compensation circuit comprising means (4,R1) for providing a constant current and a third temperature sensitive element ($R_R$) formed on the semiconductor substrate and coupled with the constant current means such that a voltage developed across the third temperature sensitive element provides a voltage that is a function of the ambient temperature of the fluid which voltage controls, and maintains constant, a current supplied to the first and second temperature sensitive elements.

2. A fluid flow sensor as claimed in claim 1, characterised in that the constant current to the first and second temperature sensitive elements is provided by an amplifier (5), the voltage developed across the third temperature sensitive element being applied to an input of the amplifier and an output of the amplifier being connected to the first and second elements coupled in series.

3. A fluid flow sensor as claimed in claim 1 or claim 2, characterised in that the means (4, R1) for providing the constant current through the first and second temperature sensitive elements includes a constant current source (4) connected in series with the third temperature sensitive element ($R_R$).

4. A fluid flow sensor as claimed in claim 2, characterised in that the means (4,R1) for providing the constant current through the first and second temperature sensitive elements includes a resistor (R1) connected in series with the third temperature sensitive element ($R_R$) and the amplifier (5) is provided with a feedback resistor R3.

5. A fluid flow sensor as claimed in any preceding claim, characterised in that the serially connected first and second temperature sensitive elements ($R_x$, $R_y$) are connected across serially connected resistors ($R_A$, $R_B$) to form a microbridge sensor and in that the junction point and the resistors ($R_A$, $R_B$) are connected to the respective inputs of an electrical amplifier which in operation of the sensor provides an output dependant on the fluid flow between the temperature sensitive elements.

**Patentansprüche**

1. Fluidstromsensor mit einem ersten und ein zweiten temperatur-empfindlichen Element ($R_X$,$R_Y$), die auf einem Halbleitersubstrat (10) auf gegenüberliegenden Seiten eines Heizelementes in Richtung des Fluidstromes derart angeordnet sind, daß der Fluidstrom eine unterschiedliche Erhitzung eines der temperatur-empfindlichen, Elemente relativ zu dem anderen temperatur-empfindlichen Element bewirkt, und mit einer Schaltung zur Messung des Fluidstromes, zu welcher Schaltung das erste und zweite temperatur-empfindliche Element gehören, die in Reihe geschaltet sind, wobei ein Verbindungspunkt zwischen dem ersten und dem zweiten Element an eine Schaltung anschließbar ist zur Anzeige des Fluidstromes als Funktion der Spannung in dem Verbindungspunkt, **dadurch gekennzeichnet**, daß eine Kompensationsschaltung für die Umgebungstemperatur vorhanden ist, die eine Einrichtung (4, R1) zur Bereitstellung eines konstanten Stromes und ein drittes temperatur-empfindliches Element ($R_R$) enthält, welches auf dem Halbleitersubstrat angeordnet ist und mit der Konstantstromeinrichtung derart gekoppelt ist, daß eine an dem dritten temperatur-empfindlichen Element auftretende Spannung eine Spannung als Funktion der Umgebungstemperatur des Fluids liefert, wobei diese Spannung einen Strom steuert und konstant hält, der dem ersten und zweiten temperatur-empfindlichen Element zugeführt wird.

2. Fluidstromsensor nach Anspruch 1, **dadurch gekennzeichnet**, daß der dem ersten und zweiten temperatur-empfindliche Element zugeführte Konstantstrom von einem Verstärker (5) geliefert wird, daß die an dem dritten temperatur-empfindlichen Element auftretende Spannung dem Eingang des Verstärkers zugeführt wird und daß ein Ausgang des Verstärkers an die Reihenschaltung aus dem ersten und zweiten Element angeschlossen ist.

3. Fluidstromsensor nach Anspruch 1 oder 2, **dadurch gekennzeichnet**, daß zu der Einrichtung (4, R1) zur Erzeugung des Konstantstromes durch das erste und zweite temperatur-empfindliche Element eine Konstantstromquelle (4) gehört, die in Reihe mit dem dritten temperatur-empfindlich ($R_R$) geschaltet ist.

4. Fluidstromsensor nach Anspruch 2, **dadurch gekennzeichnet**, daß zu der Einrichtung (4, R1) zur Erzeugung des Konstantstromes durch das erste und zweite temperatur-empfindliche Element ein Widerstand (R1) gehört, der mit dem dritten temperatur-empfindlichen Element ($R_R$) in Reihe geschaltet ist, und daß der Verstärker (5) mit einem Rückkopplungswiderstand (R3) versehen ist.

5. Fluidstromsensor nach einem der vorhergehenden Ansprüche, **dadurch gekennzeichnet**, daß die aus den ersten und zweiten temperatur-empfindlichen Element ($R_X$, $R_Y$) gebildete Reihenschaltung zur Bildung eines Mikrobrückensensors parallel zu einer Reihenschaltung aus Widerständen ($R_A$, $R_B$) geschaltet ist und daß der Verbindungspunkt und die Widerstände ($R_A$, $R_B$) an die entsprechenden Eingänge eines elektrischen Verstärkers angeschlossen sind, der im Betrieb des Sensors ein Ausgangssignal erzeugt, welches von dem Fluidstrom zwischen den temperatur-empfindlichen Elementen abhängig ist.

**Revendications**

1. Capteur de débit de fluide comportant un premier et un deuxième capteur< de température ($R_x$, $R_y$) formés sur un substrat semi-conducteur (10), de chaque côté d'un élément chauffant, selon la direction du débit de fluide, de telle sorte que le débit de fluide provoque un chauffage différentiel de l'un des capteurs de température par rapport à l'autre, un circuit de mesure du débit de fluide réalisé en reliant en série le premier et le deuxième capteur de température par un point de raccordement, entre le premier et le second capteur, qui est susceptible d'être relié à un circuit d'indication du débit de fluide en fonction de la tension au point de raccordement, caractérisé en ce qu'il comporte un circuit de compensation de la température ambiante qui comporte des moyens (4, R1) pour produire un courant constant, et un troisième capteur de température ($R_R$) formé sur le substrat semi-conducteur et relié aux moyens de production de courant constant, de telle sorte qu'une tension aux bornes du troisième capteur de température fournit une tension qui est une fonction de la température ambiante du fluide, pour contrôler en tension et maintenir constant un courant fourni aux premier et deuxième capteurs de température.

2.  Capteur de débit de fluide selon la revendication 1, caractérisé en ce que le courant constant fourni aux premier et deuxième capteurs de température est fourni par un amplificateur (5), la tension aux bornes du troisième capteur de température étant appliquée à l'entrée de l'amplificateur et une sortie de l'amplificateur étant reliée aux premier et deuxième capteurs agencés en série.

3.  Capteur de débit de fluide selon l'une des revendications 1 ou 2, caractérisé en ce que les moyens (4, R1) pour fournir le courant constant aux premier et deuxième capteurs de température comportent une source de courant constant (4) reliée en série avec le troisième capteur de température ($R_R$).

4.  Capteur de débit de fluide selon la revendication 2, caractérisé en ce que les moyens (4, R1) pour fournir le courant constant aux premier et deuxième capteurs de température comportent une résistance (R1) reliée en série avec le troisième capteur de température ($R_R$), et en ce que l'amplificateur (5) comporte une résistance de rétroaction (R3).

5.  Capteur de débit de fluide selon l'une quelconque des revendications précédentes, caractérisé en ce que les premier et deuxième capteurs de température ($R_x$, $R_y$) reliés en série sont par ailleurs reliés au travers de deux résistances ($R_A$, $R_B$), elles-mêmes reliées en série, pour former un capteur en pont, et en ce que le point de raccordement et les résistances ($R_A$, $R_B$) sont reliés aux entrées respectives d'un amplificateur électrique qui fournit, lors de l'utilisation du capteur, une tension de sortie qui est une fonction du débit de fluide entre les capteurs de température.

*FIGURE 1*

*FIGURE 2*

*FIGURE 3*

*FIGURE 4*

*FIGURE 5*

*FIGURE 6*

FIGURE 7

FIGURE 8

FIGURE 9